# EUROPÄISCHE PATENTSCHRIFT

(11) **EP 2 723 588 B1**
(45) Veröffentlichungstag und Bekanntmachung des Hinweises auf die Patenterteilung: **24.08.2016**
(21) Anmeldenummer: 12725009.0
(22) Anmeldetag: 31.05.2012
(51) Int. Cl.: B60G 11/27, B60G 11/28, F16F 9/05

(54) **ABROLLKOLBEN FÜR EINEN LUFTFEDERROLLBALG**
ROLLING PISTON FOR A ROLLING LOBE AIR SPRING
PISTON DE DÉROULEMENT POUR SOUFFLET DE SUSPENSION PNEUMATIQUE

(30) Priorität: 21.06.2011 DE 102011051237
(43) Veröffentlichungstag der Anmeldung: 30.04.2014
(73) Patentinhaber: ContiTech Luftfedersysteme GmbH, 30165 Hannover (DE)
(72) Erfinder: SCHOLZ, Karsten, 30449 Hannover (DE)
(74) Vertreter: Kilsch, Armin Ralph
(86) Internationale Anmeldenummer: PCT/EP2012/060235
(87) Internationale Veröffentlichungsnummer: WO 2012/175306

(56) Entgegenhaltungen:
- EP-A1- 1 862 335
- EP-A2- 0 590 317
- WO-A1-2009/148813
- DE-A1- 3 818 493
- JP-A- 2005 106 088
- US-A- 3 169 292
- US-A- 5 326 082

## Beschreibung

Die Erfindung betrifft einen Abrollkolben für einen Luftfederrollbalg, ausgebildet als hohler Tauchkolben, wobei der Innenraum des Abrollkolbens mit dem Innenraum der Luftfeder in Verbindung steht und wobei Luftfederrollbalg und Abrollkolben zwischen einer gefederten oder einer ungefederten Masse angeordnet sind, insbesondere zwischen Karosserie und Fahrwerk eines Fahrzeuges. Luftfederrollbalg und Abrollkolben sind dabei über entsprechende Anschlussteile mit den Massen verbunden.

Der Abrollkolben besteht aus mindestens zwei Teilen und weist ein topfförmiges Kolbenunterteil auf und ein mit dem Kolbenunterteil luftdicht verbundenes und als Deckel ausgebildetes Kolbenoberteil. Das Kolbenunterteil weist einen Kolbenboden sowie eine rotationssymmetrische Kolbenwandung auf. Das Kolbenoberteil weist einen an die Kolbenwandung anschließenden Ringbereich oder Deckelwandung auf, sowie weitere Ringprofile und/oder Ringflansche zur Anlage und zum luftdichten Anschluss des Luftfederrollbalgs an den Abrollkolben.

Im Stand der Technik sind verschiedene Arten solcher Abrollkolben bekannt. Einerseits existieren relativ schwere Abrollkolben aus Stahlblech mit voll nutzbarem Innenvolumen, die mit den entsprechenden Anschlussteilen verschraubt oder verschweißt werden. Der Abrollkolben aus Stahlblech wird als Tiefziehteil mit Konus-Dichtsitz für die Balgaufnahme hergestellt ist dementsprechend schwer und in der Herstellung teuer.

Andererseits existieren relativ leichte einteilige Kunststoffkolben mit nicht oder nur teilweise genutztem Innenvolumen und angeformten oder eingelassenen Befestigungsteilen aus Metall, mit denen eine Verbindung mit den Anschlussteilen realisiert werden kann.

Einen solchen Kunststoffkolben offenbart die EP 1 862 335 B1. Beschrieben ist hier ein Luftfederkolben, der aus einem becherförmigen Teil und einem Abdeckteil besteht, welche im Bereich ihrer Wandungen stumpf verschweißt werden. Das becherförmige Teil weist dabei eine Grundwand mit einer knopfartigen Verstärkung auf, in der ein metallischer Schraubbolzen zur Verbindung mit einem Anschlussteil der Fahrzeugachse vorgesehen ist. Nachteilig hierbei ist hierbei die relativ aufwendige Herstellung aus mehreren Materialien und das Einschmelzen des Schraubbolzens.

Die DE 10 2007 035 640 A1 offenbart einen als Hohlkörper ausgebildeten Tauchkolben für eine Luftfeder, der aus zwei luftdicht miteinander verbundenen Teilen besteht, nämlich aus einem topfförmigen Unterteil mit Boden und Mantel und aus einem Oberteil. Auch hier ist eine Befestigungsaufnahme für eine Schraube/einen Schraubbolzen vorgesehen, der den Kolben mit dem jeweiligen Anschlussteil verbindet.

Der Erfindung lag also die Aufgabe zu Grunde einen leichten und einfach herzustellenden Abrollkolbenkolben herzustellen, dessen Innenvolumen vollständig für die Federung nutzbar ist und bei dem eine einfach zu montierende und leicht herzustellende Verbindung mit dem jeweiligen Anschlussteil ermöglicht wird.

Gelöst wird diese Aufgabe durch die Merkmale des Hauptanspruchs. Weitere vorteilhafte Ausbildungen sind in den Unteransprüchen offenbart.

Dabei ist am Kolbenboden oder im unteren Bereich der rotationssymmetrischen Kolbenwandung des Kolbenunterteils eine mit dem Anschlussteil der mit dem Kolbenunterteil verbundenen Masse zusammenwirkende Rast- oder Schnappverbindung vorgesehen. Eine insbesondere für größere auftretende Querkräfte vorteilhafte Ausbildung besteht darin, dass die Rast- oder Schnappverbindung einen im Anschlussteil angeordneten und mit einem Rastprofil versehenen Vorsprung) oder einen in Richtung des Kolbenbodens (6) vom Anschlussteil abragenden Rastbolzen aufweist, der in eine entsprechende komplementäre Aufnahmeöffnung oder Bohrung des Kolbenbodens eingreift und dort einrastbar ist. Der Vorsprung/Rastbolzen kann dann sehr einfach auf unterschiedliche Kraftübertragung ausgelegt werden

Damit entsteht ein sehr leichter zweiteiliger Kolben, dessen Inneres durch die luftdichte Verbindung von Oberteil und Unterteil zum nutzbaren Volumen gehört und der der überaus einfach zu montieren und herzustellen ist. Insbesondere bei der Ausbildung des Kolbens aus Kunststoff, d.h. von Oberteil, Unterteil und Rast- oder Schnappverbindung aus diesem Material erhält man eine leicht bauende Konstruktion mit sehr guten Festigkeitseigenschaften und hervorragender Montierbarkeit, ohne das Einlagen aus anderen Materialien (Inserts) benötigt werden.

Demgegenüber ist im Stand der Technik durch die US 5326082 A eine Ausführung bekannt die Rast- oder Schnappverbindung als zentrisch am Kolbenboden oder am Kolbendeckel angeordneter und nach außen in Richtung des Anschlussteils vom Kolbenboden abragender Rastbolzen ausgebildet ist, der mit Rastnasen in eine entsprechende Aufnahmeöffnung oder Bohrung des Anschlussteils einrastbar ist.. Ebenfalls im Stand der Technik, nämlich durch die EP 0590317 A2 ist eine Ausführung bekannt, bei der die Rast- oder Schnappverbindung einen an einem Ende mit Rastnasen und am anderen Ende mit einem Bund versehenen separat hergestellten Stift aufweist, der durch eine entsprechende Aufnahmeöffnung oder Bohrung des Anschlussteils hindurchgreift, mit seinem Bund an der Rückseite des Anschlussteiles anliegt und in eine am Kolbenboden angeordnete Aufnahmeöffnung oder Bohrung einrastbar ist. Beide im Stand der Technik bekannte Ausbildung bestehen darin, dass der Rastbolzen oder der Stift hohl ausgebildet und mit segmentierten Wänden versehen sind, welche auf ihrer Außenseite die Rastnasen aufweisen.

Eine weitere vorteilhafte Ausbildung besteht darin, dass der Innenraum des Abrollkolbens mit rippenartigen Versteifungselementen und/oder mit vom Kolbenboden nach innen ragenden hohlzylindrischen Körpern ausgesteift ist. Damit lassen sich auch Querkräfte oder schräg einwirkende Kräfte problemlos auffangen. Auch lässt sich mit einer solchen Ausbildung die Wandstärke der rohrförmigen Stützenteile ggf. weiter reduzieren.

Dieser Effekt wird bei weiteren vorteilhaften Ausbildungen noch dadurch erhöht, dass die rippenartigen Versteifungselemente stern- oder strahlenförmig angeordnet sind, ggf. und vorteilhafterweise sich von den Innenwänden des Abrollkolbens zum Boden hin verjüngen.

Die luftdichte Verbindung zwischen Kolbenunterteil und Kolbenoberteil wird vorteilhafterweise als Schweiß- oder Schraubverbindung, ggf. mit Dichtung, am äußeren Kolbenmantel, d.h. am Außenumfang des Abrollkolbens ausgeführt, also an der Kolbenwandung, und nicht am Boden oder im Deckelbereich. Gerade bei Kunststoff bietet sich hier die leicht herzustellende Stumpfverschweißung durch Reibschweißen oder das Ultraschall-Schweißverfahren an. Man erhält so auf einfache Weise ohne umfangreiche Montagevorrichtungen eine luftdichte Verbindung von Oberteil und Unterteil zur Bildung des Innenvolumens.

Aufgrund der erreichbaren Leichtbaukonstruktion lässt sich der erfindungsgemäße Abrollkolben besonders vorteilhaft bei einer Luftfedereinrichtung für ein Fahrzeug verwenden.

Anhand eines Ausführungsbeispieles soll die Erfindung näher erläutert werden. Es zeigen
- Fig. 1: einen im Stand der Technik bekannte Ausführungsform eines Abrollkolben für eine Luftfeder
- Fig. 2: eine weitere im Stand der Technik bekannte Ausführungsform eines eines Abrollkolbens
- Fig. 3: eine erfindungsgemäße Ausführung eines Abrollkolbens
- Fig. 4: eine weitere Ausführung eines Abrollkolbens
- Fig. 5: einen Teilzusammenbau einer Federung mit einem Abröllkolben aus dem Stand der Technik

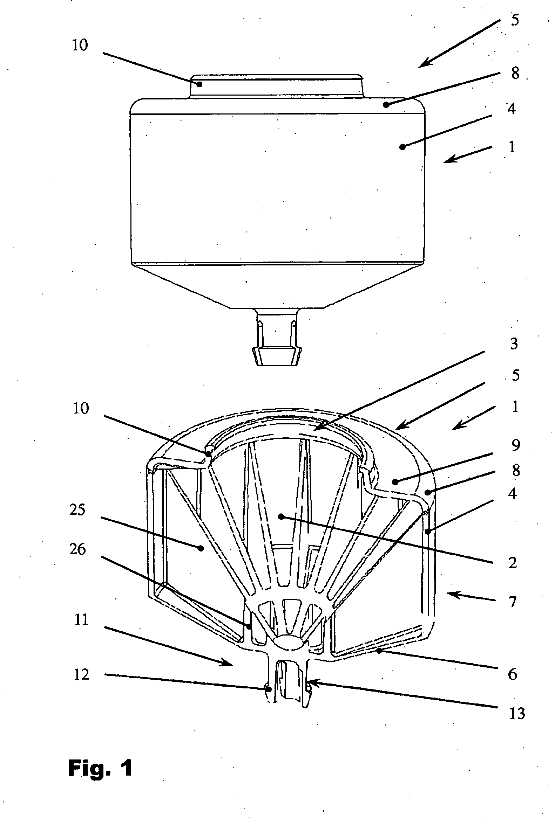

Die Fig. 1 zeigt einen Abrollkolben 1 aus Kunststoff aus dem Stand der Technik, wie er in etwa vergleichbarer Form in der US 5326082 A beschrieben ist, im oberen Teil in der Ansicht und im unteren Teil als perspektivische Schriittdarstellung, für einen Lüftfederrollbalg. Der Abrollkolben 1 ist ausgebildet als hohler Tauchkolben, wobei der Innenraum 2 des Abrollkolbens über die Öffnung 3 mit dem Innenraum der hier nicht näher dargestellten Luftfeder in Verbindung steht.

Der vollständig aus Kunststoff gefertigte Abrollkolben 1 besteht aus zwei Teilen 4 und 5, nämlich aus einem topfförmigen Kolbenunterteil 4 und einem mit dem Kolbenunterteil 4 luftdicht verbundenen und als Deckel ausgebildeten Kolbenöberteil 5.

Das Kolbenunterteil 4 weist einen Boden 6 auf sowie eine rotationssymmetrische Kolbenwandung 7. Das Kolbenoberteil 5 weist einen an die Kolbenwandung 7 des Kolbenunterteils anschließenden Ringbereich 8, d.h. eine Deckelwandung auf, sowie ein weiteres Ringprofil 9 und einen Ringflansch 10 zur Anlage und zum luftdichten Anschluss des Luftfederrollbalgs an den Abrollkolben 1.

Am Kolbenboden 6 des Kolbenunterteils 4 ist eine mit einem hier nicht näher dargestellten Anschlussteil der mit dem Kolbenunterteil verbundenen Masse zusammenwirkende Rast- oder Schnappverbindung vorgesehen, die hier als zentrisch am Kolbenboden 6 angeordneter und nach außen in Richtung des Anschlussteils vom Kolbenboden abragender Rastbolzen 11 ausgebildet ist, der mit Rastnasen 12 in eine entsprechende Aufnahmeöffnung oder Bohrung des Anschlussteils einrastbar ist.

Der Rastbolzen 11 ist hohl ausgebildet und mit segmentierten Wänden 13 versehen sind, welche auf ihrer Außenseite die Rastnasen 12 aufweisen.

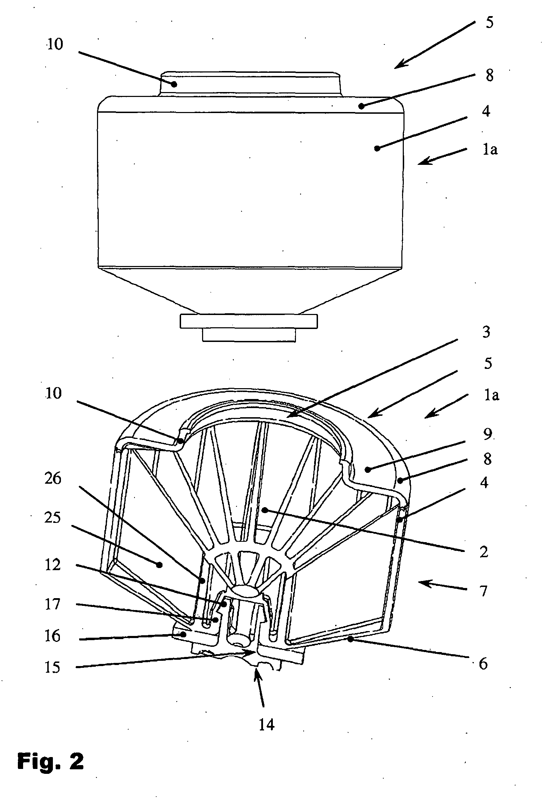

Fig. 2 zeigt eine weitere Ausführung eines Abrollkolbens 1a aus dem Stand der Technik, wie er etwa vergleichbarere Form in der EP 0590317 A2 beschrieben ist, bei dem die Rast- oder Schnappverbindung einen an einem Ende mit Rastnasen 12 und am anderen Ende mit einem Bund versehenen Stift 14 aufweist, der durch eine entsprechende Aufnahmeöffnung oder Bohrung 15 eines Anschlussteils 16 hindurchgreift und in eine am Kolbenboden 6 angeordnete Aufnahme 17 einrastbar ist.

Der Stift 14 ist hohl ausgebildet und mit segmentierten Wänden versehen, welche auf ihrer Außenseite die Rastnasen 12 aufweisen.

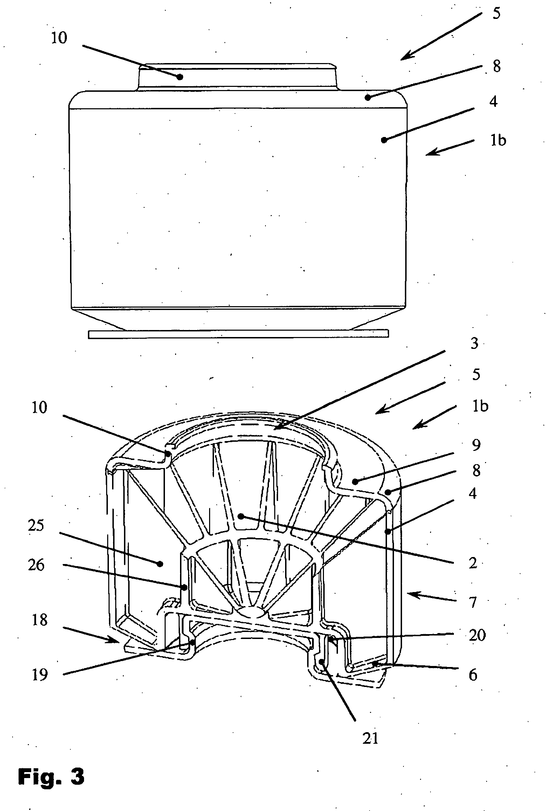

Im Unterscheid zu den Ausführungen in der Fig. 1 und 2. zeigt nun Fig. 3 die Ausführung eines erfindungsgemäßen Abrollkolbens 1b, bei dem die Rast- oder Schnappverbindung einen im Anschlussteil 18 angeordneten und mit einem Rastprofil versehenen Vorsprung 19 aufweist, der in eine entsprechende komplementäre Aufnahmeöffnung bzw. Aufnahme 20 des Kolbenbodens 6 eingreift und dort einrastbar ist. Hier weist die Aufnahme 20 die Rastnasen 21 auf, die hier auch in mit segmentierten Wänden der Aufnahme 20 ausgebildet sind.

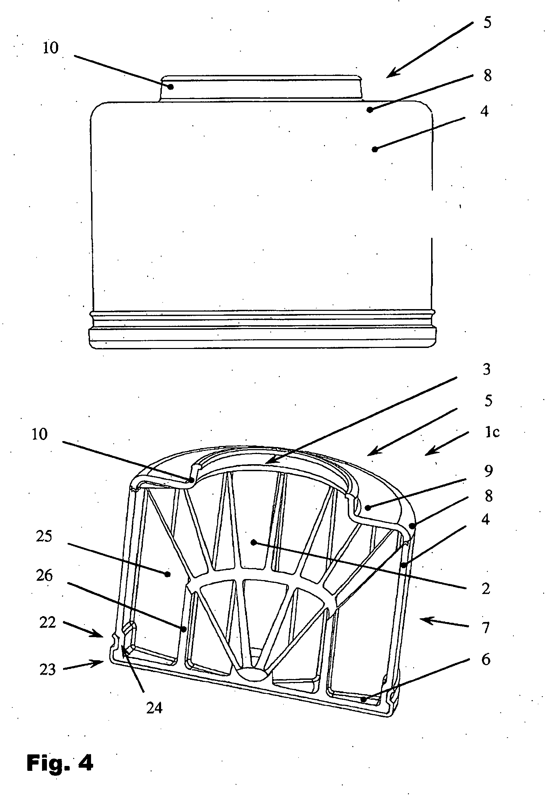

Fig. 4 zeigt eine andersartige Ausführung eines Abrollkolbens 1c, bei dem die Rast- oder Schnappverbindung einen mit einem hier nicht näher dargestellten Anschlussteil verbindbaren und mit einem Rastprofil 22 an der Innenwand versehenen topfförmigen Hohlkörper 23 aufweist, der das Kolbenunterteil 4 mindestens teilweise aufnimmt und dessen Rastprofil 22 in eine entsprechende komplementäre Aufnahme 24 auf der Außenseite des Kolbenunterteils 4 eingreift und dort einrastbar ist.

Der Innenraum des Abrollkolbens 1 ist jeweils mit rippenartigen Versteifungselementen 25 und mit vom Kolbenboden 6 nach innen ragenden hohlzylindrischen Körpern 26 ausgesteift. Die rippenartigen Versteifungselemente 25 sind sternförmig angeordnet und verjüngen sich zum Kolbenboden 6.

Bei allen erfindungsgemäßen Ausführungen ist die luftdichte Verbindung zwischen Kolbenunterteil 4 und Kolbenoberteil 5 als Stumpfschweißverbindung am äußeren Kolbenmantel ausgeführt.

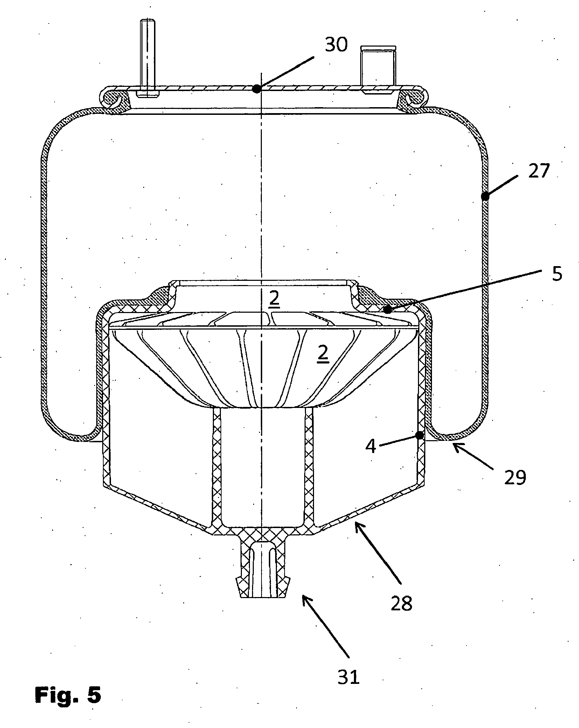

Fig. 5 zeigt, zur Darstellung der Einbausituation in einem Kraftfahrzeug, einen Teilzusammenbau einer Federung mit einem dem Stand der technik entsprechenden Abrollkolben 28. An das Kolbenoberteil 5 ist der Luftfederrollbalg 27 luftdicht an den als Tauchkolben ausgebildeten Abrollkolben 28 angeschlossen und rollt beim Ein- und Ausfedern unter Bildung einer Rollfalte 29 am Außenumfang bzw. an der Kolbenwandung des Abrollkolbens 28 ab.

Dabei ist der Luftfederdeckel 30 mit einer hier nicht näher dargestellten Karosserie und der Abrollkolben 28 über den mit einem zugehörigen Fahrwerksteil eines Fahrzeuges zusammenwirkenden Rastbolzen 31 mit dem Fahrwerk verbunden.

Die luftdichte Verbindung zwischen Kolbenunterteil 4 und Kolbenoberteil 5 ist hier als Stumpfschweißverbindung der Kolbenwandungen 7 und 8 am äußeren Kolbenmantel ausgerührt. Die Stumpfschweißverbindung ist hier kalottenförmig vorgebildet.

### Bezugszeichenliste

### (Teil der Beschreibung)

- 1, 1a, 1b, 1c: Abrollkolben
- 2: Innenraum
- 3: Öffnung zum Rollbalg / zum Innenraum der Luftfeder
- 4: Kolbenunterteil
- 5: Kolbenoberteil
- 6: Kolbenboden
- 7: Kolbenwandung
- 8: Ringbereich
- 9: Ringprofil
- 10: Ringflansch
- 11: Rastbolzen
- 12: Rastnasen
- 13: Segmentierte Wand
- 14: Stift
- 15: Bohrung des Anschlussteils
- 16: Anschlussteil
- 17: Aufnahme
- 18: Anschlussteil
- 19: Vorsprung, im Anschlussteil ausgebildet
- 20: Aufnahme
- 21: rastnasen
- 22: Rastprofil
- 23: Topfförmiger Hohlkörper
- 24: Aufnahme
- 25: Rippenartiges Versteifungselement
- 26: Hohlzylindrischer Körper
- 27: Luftfederrollbalg
- 28: Abrollkolben
- 29: Rollfalte
- 30: Luftfederdeckel
- 31: Rastbolzen

## Patentansprüche

1. Abrollkolben (1) für einen Luftfederrollbalg, ausgebildet als hohler Tauchkolben, wobei der Innenraum (2) des Abrollkolbens (1) mit dem Innenraum der Luftfeder in Verbindung steht und wobei Luftfederrollbalg und Abrollkolben (1, 1a, 1b, 1c, 28) zwischen einer gefederten einer ungefederten Masse angeordnet sind, *"und" statt "oder"* insbesondere zwischen Karosserie und Fahrwerk eines Fahrzeuges, und über entsprechende Anschlussteile (16, 18) mit den Massen verbunden sind, wobei der Abrollkolben folgende Merkmale aufweist:
- der Abrollkolben (1, 1a, 1b, 1c, 28) besteht aus mindestens zwei Teilen und weist ein topfförmiges Kolbenunterteil (4) auf und ein mit dem Kolbenunterteil luftdicht verbundenes und als Deckel ausgebildetes Kolbenoberteil (5),
- das.Kolbenunterteil (4) weist einen Kolbenboden (6) sowie eine rotationssymmetrische Kolbenwandung (7) auf,
- das Kolbenoberteil (5) weist einen an die Kolbenwandung anschließenden Ringbereich oder Deckelwandung (8) auf, sowie weitere Ringprofile (9) und/oder Ringflansche (10) zur Anlage und zum luftdichten Anschluss des Luftfederrollbalgs an den Abrollkolben,
- wobei am Kolbenboden (6) oder im unteren Bereich der rotationssymmetrischen Kolbenwandung (7) des Kolbenunterteils (4) eine mit dem Anschlussteil der mit dem Kolbenunterteil verbundenen Masse zusammenwirkende Rast- oder Schnappverbindung (11, 14, 19, 20, 22, 24) vorgesehen ist.
**dadurch gekennzeichnet,**
- **dass** die Rast- oder Schnappverbindung einen mit einem Rastprofil versehenen Vorsprung (19) oder einen in Richtung des Kolbenbodens (6) vom Anschlussteil abragenden Rastbolzen im Anschlussteil (18) aufweiset, der in eine entsprechende komplementäre Aufnahmeöffnung oder Bohrung (20) des Kolbenbodens (6) eingreift und dort einrastbar ist.

2. Abrollkolben nach Anspruch 1, ausgebildet aus Kunststoff.

3. Abrollkolben (1b 1c) nach einem der Ansprüche 1 oder 2, bei dem der Innenraum des Abrollkolbens (1) mit rippenartigen Versteifungselementen (25) und/oder mit vom Kolbenboden (6) nach innen ragenden hohlzylindrischen Körpern (26) ausgesteift ist.

4. Abrollkolben (1b, 1c) nach einem der Ansprüche 1 bis 3, bei dem die rippenartigen Versteifungselemente (25) stern- oder strahlenförmig angeordnet sind.

5. Luftfedereinrichtung für ein Fahrzeug mit einem Abrollkolben nach einem der Ansprüche 1 bis 4.

## Claims

1. Rolling piston (1) for an air spring rolling bellows, configured as a hollow plunger piston, the interior space (2) of the rolling piston (1) being connected to the interior space of the air spring, and the air spring rolling bellows () and rolling piston (1, 1a, 1b, 1c, 28) being arranged between a sprung or an unsprung mass, in particular between the body and running gear of a vehicle, and being connected via corresponding connector parts (16, 18) to the masses, the rolling piston having the following features:
- the rolling piston (1, 1a, 1b, 1c, 28) consists of at least two parts and has a pot-shaped piston lower part (4) and a piston upper part (5) which is connected to the piston lower part in an airtight manner and is configured as a cover,
- the piston lower part (4) has a piston head (6) and a rotationally symmetrical piston wall (7),
- the piston upper part (5) has an annular region or cover wall (8) which adjoins the piston wall, and further annular profiles (9) and/or annular flanges (10) for contact and for airtight connection of the air spring rolling bellows to the rolling piston,
- a latching or snap-action connection (11, 14, 19, 20, 22, 24) which interacts with the connector part of the mass which is connected to the piston lower part being provided on the piston head (6) or in the lower region of the rotationally symmetrical piston wall (7) of the piston lower part (4),
**characterized**
- **in that** the latching or snap-action connection has a projection (19) which is provided with a latching profile or a latching pin in the connector part (18), which latching pin protrudes from the connector part in the direction of the piston head (6), which engages into a corresponding complementary receiving opening or bore (20) of the piston head (6) and can be latched there.

2. Rolling piston according to Claim 1, configured from plastic.

3. Rolling piston (1b, 1c) according to either of Claims 1 and 2, in which the interior space of the rolling piston (1) is stiffened by way of rib-like stiffening elements (25) and/or by way of hollow-cylindrical bodies (26) which protrude inwards from the piston head (6).

4. Rolling piston (1b, 1c) according to one of Claims 1 to 3, in which the rib-like stiffening elements (25) are arranged in a star-shaped or radial manner.

5. Air spring device for a vehicle having a rolling piston according to one of Claims 1 to 4.

## Revendications

1. Piston de déroulement (1) pour un soufflet de suspension pneumatique, réalisé sous la forme d'un piston plongeur creux, l'espace intérieur (2) du piston de déroulement (1) étant en liaison avec l'espace intérieur de la suspension pneumatique et le soufflet de suspension pneumatique () et le piston de déroulement (1, 1a, 1b, 1c, 28) étant disposés entre une masse suspendue ou une masse non suspendue, en particulier entre la carrosserie et le châssis d'un véhicule, et étant connectés aux masse par le biais de pièces de raccordement correspondantes (16, 18), le piston de déroulement présentant les caractéristiques suivantes :
- le piston de déroulement (1, 1a, 1b, 1c, 28) se compose d'au moins deux pièces et présente une partie inférieure de piston en forme de pot (4) et une partie supérieure de piston (5) raccordée de manière étanche à l'air à la partie inférieure de piston et réalisée en tant que couvercle,
- la partie inférieure de piston (4) présente un fond de piston (6) ainsi qu'une paroi de piston à symétrie de révolution (7),
- la partie supérieure de piston (5) présente une région annulaire ou une paroi de couvercle (8) se raccordant à la paroi de piston, ainsi que d'autres profilés annulaires (9) et/ou brides annulaires (10) pour l'application et pour le raccordement étanche à l'air du soufflet de suspension pneumatique au piston déroulant,
- au niveau du fond de piston (6) ou dans la région inférieure de la paroi de piston à symétrie de révolution (7) de la partie inférieure de piston (4) est prévue une connexion par encliquetage ou emboîtement (11, 14, 19, 20, 22, 24) coopérant avec la partie de raccordement de la masse connectée à la partie inférieure de piston,
**caractérisé en ce que**
- la connexion par encliquetage ou par emboîtement présente dans la partie de raccordement (18) une saillie (19) pourvue d'un profilé d'encliquetage ou un boulon d'encliquetage faisant saillie hors de la partie de raccordement dans la direction du fond de piston (6), qui vient en prise et s'encliquète dans une ouverture de réception complémentaire correspondante ou dans un alésage (20) du fond de piston (6).

2. Piston de déroulement selon la revendication 1, réalisé en plastique.

3. Piston de déroulement (1b, 1c) selon l'une quelconque des revendications 1 ou 2, dans lequel l'espace interne du piston de déroulement (1) est renforcé avec des éléments de renforcement en forme de nervures (25) et/ou avec des corps (26) cylindriques creux faisant saillie vers l'intérieur depuis le fond du piston (6).

4. Piston de déroulement (1b, 1c) selon l'une quelconque des revendications 1 à 3, dans lequel les éléments de renforcement en forme de nervures (25) sont disposés en forme d'étoile ou de faisceau.

5. Dispositif de suspension pneumatique pour un véhicule comprenant un piston de déroulement selon l'une quelconque des revendications 1 à 4.
